(19) Europäisches Patentamt
European Patent Office
Office européen des brevets

(11) EP 2 879 055 B1

(12) **EUROPEAN PATENT SPECIFICATION**

(45) Date of publication and mention
of the grant of the patent:
**21.06.2017 Bulletin 2017/25**

(51) Int Cl.:
***G06F 11/34*** *(2006.01)*

(21) Application number: **14155094.7**

(22) Date of filing: **13.02.2014**

(54) **System and method facilitating performance prediction of multi-threaded application in presence of resource bottlenecks**

System und Verfahren zur Unterstützung der Leistungsvorhersage einer Multithread-Anwendung in Gegenwart von Ressourcenengpässen

Système et procédé facilitant la prévision des performances d'application multifils en présence de goulots d'étranglement de ressources

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2013 IN MU36992013**

(43) Date of publication of application:
**03.06.2015 Bulletin 2015/23**

(73) Proprietor: **Tata Consultancy Services Limited 400021 Mumbay (IN)**

(72) Inventors:
• **Duttagupta, Subhasri**
 **400093 Mumbai (IN)**
• **Virk, Rupinder Singh**
 **400093 Mumbai (IN)**
• **Nambiar, Manoj Karuna karan**
 **400093 Mumbai (IN)**

(74) Representative: **Potter Clarkson LLP**
 **The Belgrave Centre**
 **Talbot Street**
 **Nottingham NG1 5GG (GB)**

(56) References cited:
 **JP-A- 2000 298 593      US-A1- 2011 218 786**

• **MENASCE D A: "Two-level iterative queuing modeling of software contention", MODELING, ANALYSIS AND SIMULATION OF COMPUTER AND TELECOMMUNICATIONS S YSTEMS, 2002. MASCOTS 2002. PROCEEDINGS. 10TH IEEE INTERNATIONAL SYMPO SIUM ON 11-16 OCT. 2002, PISCATAWAY, NJ, USA,IEEE, 11 October 2002 (2002-10-11), pages 267-276, XP010624441, ISBN: 978-0-7695-1840-4**
• **SÖREN SONNTAG ET AL: "SystemQ: Bridging the gap between queuing-based performance evaluation and SystemC", DESIGN AUTOMATION FOR EMBEDDED SYSTEMS ; AN INTERNATIONAL JOURNAL, KLUWER ACADEMIC PUBLISHERS, BO, vol. 11, no. 2-3, 11 January 2007 (2007-01-11), pages 91-117, XP019525916, ISSN: 1572-8080, DOI: 10.1007/S10617-006-9002-3**
• **DANIEL A MENASCÉ: "Simple analytic modeling of software contention", ACM SIGMETRICS PERFORMANCE EVALUATION REVIEW, ASSOCIATION FOR COMPUTING MACHINERY, NEW YORK, NY, US, vol. 29, no. 4, 1 March 2002 (2002-03-01), pages 24-30, XP058231385, ISSN: 0163-5999, DOI: 10.1145/512840.512844**

**Description**

TECHNICAL FIELD

The present disclosure in general relates to a method and system predicting performance of a multi-threaded application. More particularly, the present disclosure relates to prediction of performance of the multi-threaded application in presence of resource bottlenecks.

BACKGROUND

In typical multi-tier enterprise system, a software application is usually accessed by a large number of users. Due to the large number of users, probability of resource bottlenecks has increased drastically. Presence of resource bottlenecks typically hampers performance of the software application. The bottleneck may occur either due to software resources or hardware resources. In order to increase the scalability of the mutli-tier enterprise system, the resource bottlenecks should be detected while software application is being tested.

Most of the multi-tier enterprise systems have employed various methods to identify the resource bottlenecks as the resource bottlenecks may limit the overall performance of the multi-tier enterprise system. Resource bottlenecks are identified only if the resource bottlenecks occur explicitly during performance testing itself or at a very later stage in a production environment. Discrete event simulation modeling is one of the well-known approaches used for predicting performance of the software application. However, the development of such simulation model is a time consuming process.

A prior art paper (XP58231385) by Daniel A. Menascé entitled "Simple analytic modeling of software contention" discloses a general approach to modeling software contention using queuing networks. The approach is called as SQN HQN two level iterative process. The queuing networks represents software resources and hardware resources. This paper provides a simple analytical modeling technique for estimating software contention delay. However, when a large number of threads are accessing the multithreaded application, the technique of this paper fails as this algorithm goes into infinite loop and fails to determine performance of the multithreaded application. [003b] Another prior art paper titled "Bridging the gap between queuing based performance evaluation" discloses use of multiclass queuing networks during the specification phase of the design flow for modeling data flow oriented systems. A platform architecture evaluation framework called 'systemQ' based on queuing networks is developed, wherein SystemQ is targeted at modeling and evaluation of systems from data flow oriented domains such as network processing.

Another patent application US20110218786 discloses a queuing network model of web services environment. The behavior of service is abstracted in three phases serial, parallel and dormant. A method id provided for estimating the parameters of the model based on stochastic approximation technique.

Another patent application JP2000298593 discloses prediction of a performance index for the parallel degree of parallel computers in a multitask environment. When the specification of a parallel degree or computers given as input to performance prediction system, a model is generated on the basis of the specification, performance index prediction values are calculated such as the degree of improvement and more detailed performance indexes such as throughput, a response and a resource using rate from the generated model. However, these prior art fails to predict the performance when large number of thrcads start accessing the critical section of multithreaded application.

This summary is provided to introduce aspects related to system(s) and method(s) facilitating performance prediction of a multi-threaded application in presence of resource bottlenecks and the aspects are further described below in the detailed description.

The present disclosure relates to a system according to appended independent claim 1, to facilitate performance prediction of a multi-threaded software application in presence of resource bottlenecks. The system comprises of a processor and a memory coupled to the processor. The processor is capable of executing a plurality of modules stored in the memory. The plurality of module comprises of a representation module configured to represent one or more queuing networks for resources employed to run the multi-threaded software application. The resources comprise hardware resources and software resources. The queuing networks are one of a hardware queuing network or a software queuing network. The queuing networks are used to defect concurrency level at which the resource bottleneck is encountered while accessing the multi-threaded software application, wherein the resource bottleneck is first resource bottleneck, wherein the resource bottleneck is first resource bottleneck, and wherein the concurrency is detected by checking number of threads accessing the multi-threaded software application. The memory stores a computation module configured to compute a performance metrics for the multi-threaded software application. The performance metrics comprises of one or more parameters. The computation module is configured to use an iterative technique with a predetermined value of service demand to develop a relationship between the software queuing network and the hardware queuing network, wherein the relationship comprises utilization or sharing of the software resources with respect to the hardware resources with respect to the predetermined value of the service demand. Execution of the iterative technique comprises, obtaining a number of blocked threads at a critical section of the software resources based on the predetermined value of service demand, wherein the blocked threads at the critical section are threads awaiting to enter the critical section and obtaining a residence time at each of the hardware resources based on the predetermined value of service demand. Execution of the iterative technique further comprises updating a critical section service demand of a present iteration to an updated critical section service demand to reflect a waiting for the hardware resources by using the residence time. The critical section service demand is iteratively updated to account for resource contention at the hardware resources based on the residence time. Execution of the iterative technique further comprises comparing the number of the blocked threads of present iteration with the number of blocked threads of a previous iteration in order to check if the number of the blocked threads of the present iteration are higher than the number of blocked threads of the previous iteration, and checking if the updated critical section service demand is higher than the critical section service demand of the previous iteration. Execution of the iterative technique further comprises identifying a difference between the number of blocked threads at a critical section of the present iteration and the number of blocked threads at the critical section in the previous iteration.

Execution of the iterative technique further comprises repeatedly executing the iterative technique 1) if the difference in the number of blocked threads is higher than a predefined limit, and 2) if the number of the blocked threads of the present iteration are higher than the number of blocked threads of the previous iteration and 3) if the updated critical section service demand is higher than the critical section service demand of the previous iteration; else obtaining the performance metrics with the updated critical section service demand for the multithreaded software application when the difference in the number of blocked threads is lower than the predefined limit, wherein the predefined limit indicates that the difference in the number of blocked threads has converged over a number of iterations of the iterative technique, thereby determining a performance of the multi-threaded software application. The computation module is configured to determine the one or more parameters in a form of a throughput value and a response time value for the multi-threaded software application in accordance with the relationship, thereby determining the performance of the multi-threaded software application.

The present disclosure also relates to a method according to appended independent claim 9, to facilitate performance prediction of a multi-threaded software application in presence of resource bottlenecks. The method comprises of representing one or more queuing networks of resources employed to run the multi-threaded software application. The resources comprises of hardware resources and software resources. The queuing networks are one of a hardware queuing network or a software queuing network. The queuing networks helps to detect a concurrency level at which resource bottleneck is encountered while accessing the multi-threaded software application. The resource bottleneck is first resource bottleneck, and wherein the concurrency is detected by checking number of threads accessing the multi-threaded software application. The method further provides computing performance metrics for the multi-threaded software application. The performance metrics comprises of one or more parameters. The computing comprises of using an iterative technique with a predetermined value of service demand to develop a relationship between the software queuing network and the hardware queuing network, wherein the relationship comprises utilization or sharing of the software resources with respect to the hardware resources with respect to the predetermined value of the service demand and determining the one or more parameters in a form of a throughput value and a response time value for the multi-threaded software application in accordance with the relationship, thereby determining the performance of the multi-threaded software application.

Execution of the iterative technique comprises, obtaining a number of blocked threads at a critical section of the software resources based on the pre-determined value of service demand, wherein the blocked threads at the critical section are threads awaiting to enter the critical section and obtaining a residence time at each of the hardware resources based on the predetermined value of service demand. Execution of the iterative technique further comprises updating a critical section service demand of a present iteration to an updated critical section service demand to reflect a waiting for the hardware resources by using the residence time. The critical section service demand is iteratively updated to account for resource contention at the hardware resources based on the residence time. Execution of the iterative technique further comprises comparing the number of the blocked threads of present iteration with the number of blocked threads of a previous iteration in order to check if the number of the blocked threads of the present iteration are higher than the number of blocked threads of the previous iteration, and checking if the updated critical section service demand is higher than the critical section service demand of the previous iteration. Execution of the iterative technique further comprises identifying a difference between the number of blocked threads at a critical section of the present iteration and the number of blocked threads at the critical section in the previous iterations.

Execution of the iterative technique further comprises repeatedly executing the iterative technique 1) if the difference in the number of blocked threads is higher than a predefined limit, and 2) if the number of the blocked threads of the present iteration are higher than the number of blocked threads of the previous iteration and 3) if the updated critical section service demand is higher than the critical section service demand of the previous iteration; else obtaining the performance metrics with the updated critical section service demand for the multithreaded software application when the difference in the number of blocked threads is lower than the predefined limit, wherein the predefined limit indicates that the difference in the number of blocked threads has converged over a number of iterations of the iterative technique, thereby determining a performance of the multi-threaded software application.

The present disclosure also relates to a computer program product according to appended independent claim 11 having embodied thereon a computer program to facilitate performance prediction of a multi-threaded software application in presence of resource bottlenecks. The computer program product comprises of a program code for representing one or more queuing networks for resources employed to run the multi-threaded software application. The resources comprise hardware resources and software resources and the queuing networks is one of a hardware queuing network or a software queuing network. The queuing networks are used to detect a concurrency level at which resource bottleneck is encountered while accessing the multi-threaded software application wherein the resource bottleneck is first resource bottleneck, and wherein the concurrency is detected by checking number of threads accessing the multi-threaded software application. The computer program product comprises of a program code for computing a performance metrics for the multi-threaded software application. The performance metrics comprises of one or more parameters. The program code for computing comprises of a program code for using n iterative technique with a predetermined value of service demand to develop a relationship between the software queuing network and the hardware queuing network. wherein the relationship comprises utilization or sharing of the software resources with respect to the hardware resources with respect to the predetermined value of the service demand The computer program product comprises of a program code for determining the one or more parameters in a form of a throughput value and a response time value for the multi-threaded software application, thereby determining the performance of the multi-threaded software application.

BRIEF DESCRIPTION OF DRAWING

The detailed description is described with reference to the accompanying figures. In the figures, the left-most digit(s) of a reference number identifies the figure in which the reference number first appears. The same numbers are used throughout the drawings to refer like features and components.

FIG 1 illustrates a network implementation of a system facilitating performance prediction of a multi-threaded application in presence of resource bottlenecks is shown, in accordance with an embodiment of the present subject matter.

FIG 2 illustrates the system facilitating performance prediction of a multi-threaded application in presence of resource bottlenecks, in accordance with an embodiment of the present subject matter.

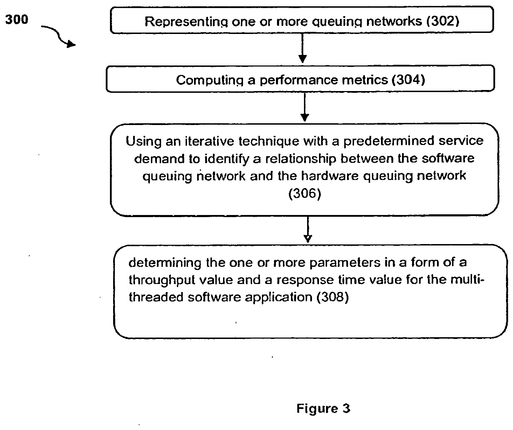

FIG 3 illustrates a method facilitating performance prediction of a multi-threaded application in presence of resource bottlenecks, accordance with an embodiment of the present subject matter.

FIG 4 illustrates a software queuing network and a hardware queuing network in accordance with an embodiment of the present subject matter.

FIG 5 illustrates a performance metrics in case wherein the critical and non-critical sections are of same size in accordance with an embodiment of the present subject matter.

FIG 6 illustrates a performance metrics in a case wherein service demand of non critical section is more than twice of service demand critical section in accordance with an exemplary embodiment of the present subject matter.

FIG 7 illustrates a performance metrics for multi class requests in accordance with an exemplary embodiment of the present subject matter.

FIG 8 illustrates a performance metrics for resource pooling in accordance with an exemplary embodiment of the present subject matter.

DETAILED DESCRIPTION

While aspects of described system and method to facilitate performance prediction of a multi-threaded application in presence of resource bottlenecks may be implemented in any number of different computing systems, environments, and/or configurations, the embodiments are described in the context of the following exemplary system.

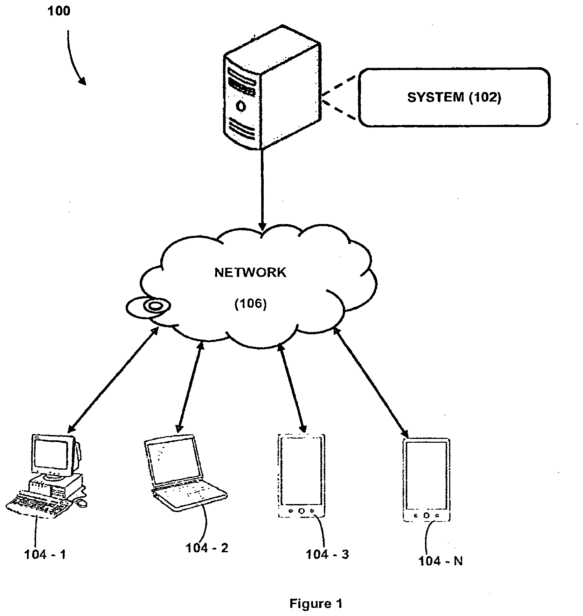

Referring now to Figure 1, a network implementation 100 of system 102 to facilitate performance prediction of a multi-threaded application in presence of resource bottlenecks is shown. Multiple queuing networks are represented by the system 102. The multiple queuing networks comprises of a hardware queuing network and a software queuing network. The queuing networks are used to detect a concurrency level at which resource bottlenecks are encountered while accessing the multi-threaded application. By using a pre-determined service demand value, a performance metrics is computed in accordance with the relationship between the hardware queuing network and the software queuing network. The performance metries comprises of one or more parameters. The one or more parameters predict the performance of the multi-threaded application.

Although the present subject matter is explained considering that the system 102 is implemented as an application on a server, it may be understood that the system 102 may also be implemented in a variety of computing systems, such as a laptop computer, a desktop computer, a notebook, a workstation, a mainframe computer, a server, a network server, and the like. In one implementation, the system 102 may be implemented in a cloud-based environment. It will be understood that the system 102 may be accessed by multiple users through one or more user devices 104-1, 104-2...104-N, collectively referred to as user 1.04 hereinafter, or applications residing on the user devices 104. Examples of the user devices 104 may include, but are not limited to, a portable computer, a personal digital assistant, a handheld device, and a workstation. The user devices 104 are communicatively coupled to the system 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

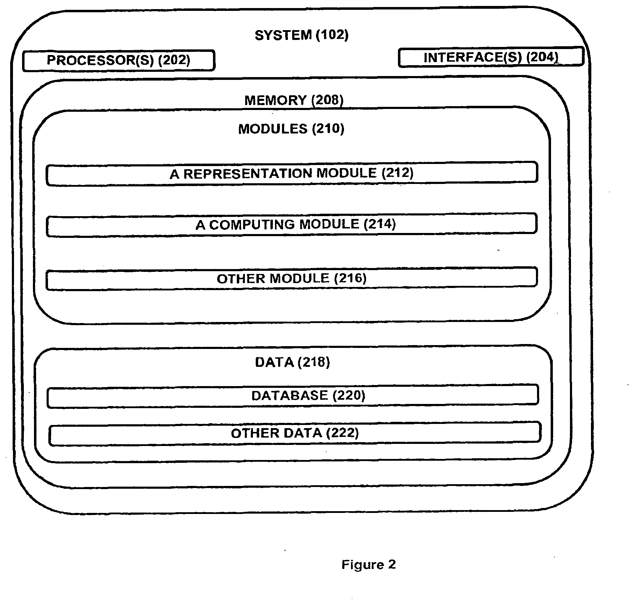

Referring now to Figure 2, the system 102 is illustrated in accordance with an embodiment of the present subject matter. In one embodiment, the system 102 may include at least one processor 202, an input/output (I/O) interface 204, a memory 208. The at least one processor 202 may be implemented as one or more microprocessors, microcomputers, microcontrollers, digital signal processors, central processing units, state machines, logic circuitries, and/or any devices that manipulate signals based on operational instructions. Among other capabilities, the at least one processor 202 is configured to fetch and execute computer-readable instructions stored in the memory 208.

The I/O interface 204 may include a variety of software and hardware interfaces, for example, a web interface, a graphical user interface, and the like. The I/O interface 204 may allow the system 102 to interact with a user directly or through the client devices 104. Further, the I/O interface 204 may enable the system 102 to communicate with other computing devices, such as web servers and external data servers (not shown). The I/O interface 204 can facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 208 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 208 may include modules 210 and data 212.

The modules 210 include routines, programs, objects, components, data structures, etc., which perform particular tasks, functions or implement particular abstract data types. In one implementation, the modules 210 may include a representation module 212 and a computation module 214. The other modules 216 may include programs or coded instructions that supplement applications and functions of the system 102.

The data 218, amongst other things, serves as a repository for storing data processed, received, and generated by one or more of the modules 216. The data 218 may also include a database 220, and other data 224. The other data 224 may include data generated as a result of the execution of one or more modules in the other module 216.

The present disclosure relates to a system(s) and method(s) facilitating performance prediction of multi-threaded application in presence of resource bottlenecks. Software queuing network and a hardware queuing network are used to detect presence of any bottleneck while accessing the application. A predetermined service value is used to compute a performance metrics. One or more parameters of performance metrics like throughput of the multi-threaded application, response time and utilization of individual resources predicts the performance of the multi-threaded application.

The queuing networks so represented by the representation module 112 refer to analytical models. Analytical models arc mathematical approximations of a real world system and may be used to predict certain behaviors of one or more systems being modeled. The queuing network (or queuing models) received and used here predicts behavior of the multi-threaded application in terms of different performance related measures (performance metrics). These measures may include but are not limited to an expected amount of waiting time. The expected time refers to that a given object will spend within a queue before being processed. The performance related measures further include an expected number of objects within a queue at a particular time, a probability that any queue will be empty, a time to service for a particular type of object, or the like. Analytical models (queuing models or queuing networks) are frequently used to predict whether a particular system (here multi-threaded application) will be able to meet established quality of service metrics, such as response time.

The present system and method predicts performance of a multi-threaded application being accessed by multiple users. The multi-threaded application may be divided into a critical section and a non-critical section. A section of a code that may be executed by only one of many concurrent threads is referred to as the critical section. In general, an access to a critical section is controlled by a lock or semaphore. Remaining section of the multi-threaded application that may be executed simultaneously by any number of concurrent threads is referred to as the non-critical section.

The resource bottlenecks may occur either due to hardware resources of software resources. The system and method facilitates in finding number of users accessing the multi-threaded application when first bottleneck is encountered. The first bottleneck may occur either due to hardware resource limitation or software resource constraint. The multi-threaded applications may have synchronous or asynchronous message communications.

The system 102 takes following presumptions while predicting performance of the multi-threaded application:

- The system 102 is in steady state. Analysis of access of the multi-threaded application does not hold good for any transient behavior of the system.
- All waiting for a software resource is implemented only through explicit synchronization constructs.
- The multi-threaded application may have a number of critical sections but it may have only one non-critical section. The non-critical section represents entire portion of the code without any critical sections.

Non-limiting examples of the multi-threaded application comprises of applications written in programming languages with explicit synchronization constructs as in C, C++, Java. In applications written in programming languages it is possible to know exact portion of the code that is synchronized.

The memory 108 stores the representation 112 module configured to represent queuing networks for resources employed to run the multi-threaded application. The queuing networks are formed to model contention for software and hardware resources. The queuing networks are formed to detect a concurrency level at which resource bottleneck (first resource bottleneck) is encountered while accessing the multi-threaded application. The concurrency is detected by checking number of threads accessing the multi-threaded software application

The representation module 112 represents hardware queuing network and software queuing network. The hardware queuing network representing all hardware resources. The hardware resources comprises of a CPU (Central Processing Unit), a memory, a disk or a combination thereof. The software queuing network represents software modules corresponding to critical and non-critical sections. The software resources comprises of software modules.

In the queuing networks, users are represented as customers and referred to as threads. The software queuing network consists of two types of software resources: delay resources and queuing resources. Delay resource corresponds to the non-critical section (NCS) code. As in non-critical section, there is no contention neither queuing happens before executing the software module. The queuing resources correspond to critical sections (CS) which are delimited by synchronization constructs. The multi-threaded application may have any number of critical sections. The SQN can consist of a non-critical section and a number of critical sections.

While a thread (i.e. the user) is using a software resource, it also uses physical resources such as CPUs and disks. The queuing network associated with the physical resources is called hardware queuing network (HQN). Thus users in the HQN are users that are using the physical resources because of the execution of software modules.

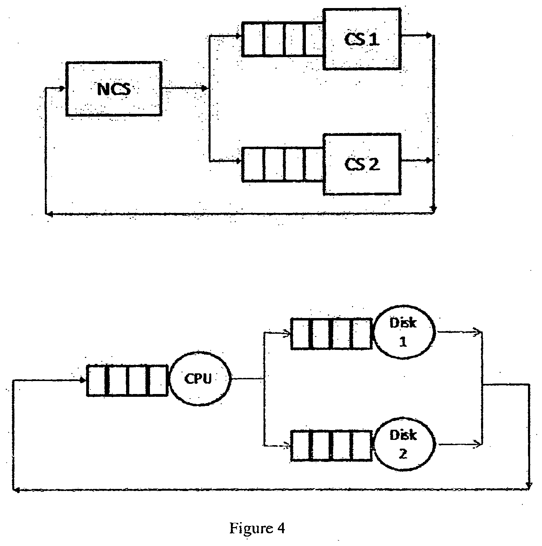

Figure 4 illustrates software queuing networks consisting of a non critical section and two critical section components. All software modules are represented using rectangles whereas all servers are represented using circles. In HQN, users can access one CPU server and any of the two disk servers. Two layers of Queuing network lead to the following important observations:

1. The time spent in the non-critical and critical sections depend on the contention at the physical resources, e.g., CPU and disk.
2. The number of users in the hardware queuing network, contending for the physical resources, is equal to the number of concurrent threads that are not blocked waiting to enter a critical section. Since blocked threads are sleeping, they are not present in the HQN queue.

Still referring to figure 4, in order to reduce complexity, presumptions have been made. By way of a non-limiting example, hardware resources CPU and disk are considered with the assumption that within critical sections, only computation and IO operations are performed and no message communication takes place.

The computation module 112 is configured to compute a performance metrics for the multi-threaded application by solving the software queuing network and the hardware queuing network by using an iterative technique with a predetermined service demand. The performance metrics comprise of one or more parameters. The one or more parameters predict performance of the multi-threaded application in presence of resource bottlenecks.

The computation module 112 uses the predetermined service demand to develop a relationship between the software queuing network and the hardware queuing network. The relationship comprises utilization or sharing of the software resources with respect to the hardware resources with respect to the predetermined value of the service demand

The computation module 112 executes a mean value analysis theorem (methodology) as the iterative technique on the pre-determined service demand. The mean value analysis theorem is used to derive performance characteristics in form of the performance metrics in accordance with the relationship, between the hardware queuing network and the software queuing network.

The computation module 112 executes the mean value analysis theorem to estimate the performance of the multi-threaded application in presence of $N$ concurrent users.

While solving the queuing networks, following presumptions have been made:

1. Pre-determined service demand of all the hardware resources at each of the tiers of a multi-tiered application is captured. The pre-determined service demand of a hardware resource (e.g., CPU) for a software module refers to the amount of CPU time required to execute the specific module.

2. The pre-determined service demand of all the synchronization events is captured. This may be achieved through instrumentation of the synchronization constructs used by the application. The Synchronization events include synchronized methods, block of code with synchronized keyword, barriers, acquiring followed by releasing of a lock, conditional variables. A method belonging to a class may be declared synchronized. Similarly a block of code may be prefixed by a keyword synchronize to mark it as synchronized section. For a barrier, if a thread arrives the barrier, it will wait till all threads arrive that point of synchronization. In case of a condition variable, a thread waits until another thread calls signal on the same condition variable.

This is further assumed that there are only two modules in the software layer, a critical section and a non-critical section. CPU demands of these sections are denoted by $D_{CS,CPU}$ and $D_{NCS,CPU}$ respectively. Total CPU service demand is obtained by adding these two values. This demand is used in the hardware queuing network.

a. $D_{CPU} = D_{CS,CPU} + D_{NCS,CPU}$ (1a)

In a multi-core machine with $C$ cores, critical section may execute on only one core at a time whereas non-critical section may execute on any cores. Hence, CPU demand for hardware queuing network is modified as follows:

a. $D_{CPU} = D_{CS.CPU} + D_{NCS.CPU}/C$ (1b)

Further, during the execution in the critical section, a thread may also access disk for doing some read and write operation. Thus, demand for critical section and non-critical section includes both demand due to CPU and disk. The total resource demand for critical section is denoted by $D_{CS}$ and it consists of demand due to CPU and disk.

a. $D_{CS} = D_{CS.CPU} + D_{CS,Disk}$ (2)

Similar relationship exists for service demand of non-critical section. The computation module 112 also considers a residence time. The residence time is total time spent by a thread at a physical resource and is denoted by $R_{CPU}$ (for CPU) or $R_{Disk}$ (for disk).

The steps performed by the computation module while executing the mean value analysis theorem are explained below:

The computation module 112 is configured to use the pre-determined service demand of the critical section and the non-critical section and saving initial values as $D^i_{CS,CPU}$ and $D^i_{NCS.CPU}$. Denote the number of blocked threads at CS by $B^i_{CS}$ and initialize it to zero.

The computation module 112 is configured to solve the software queuing network with the pre-determined service demands of all critical sections and non-critical sections. Number of customers (users or threads) in the software layer is same as the number of users in the access system.

The computation module 112 is configured to obtain the number of threads blocked at the critical section Bcs. Retain this value for comparing it with the number of blocked threads in the next iteration.

In the next step, the number of customers in the hardware queuing network is taken as the number of threads which are not blocked at the critical section ($N-B_{CS}$). Solve the hardware queuing network and obtain the residence time at each of the hardware resources such as $R_{CPU}$ or $R_{Disk}$.

The computation module 112 is configured to update the pre-determined service demand of the software modules to reflect the waiting for hardware resources as follows:

a. $D_{CS,CPU} = R_{CPU} * D^i_{CS,CPU} / (D^i_{CS.CPU} + D^i_{NCS,CPU})$

b. $D_{NCS, CPU} = R_{CPU} * D^i_{NCS. CPU} / (D^i_{CS. CPU} + D^i_{NCS. CPU})$

Thus, the service demand of the critical section is iteratively adjusted to account for resource contention at the hardware resources.

The computation module checks whether $D_{CS. CPU} < D^i_{CS, CPU}$. This step prevents the critical section demand to be lower than the initial demand. If it is true, then the final solution is obtained.

The computation module 112 find a difference between difference between the number of blocked threads at the critical section in this iteration $B_{CS}$ and in the previous iteration $B_{iCS}$. If the difference between $B_{CS}$ and $B_{iCS}$ is less than a specific limit (or a predetermined value) ($|B_{CS} - B_{iCS}| < \varepsilon$) where $\varepsilon$ is a small number or $B_{iCS} > B_{CS}$, then the final solution is obtained; else assign $B_{iCS} = B_{CS}$ and go back to *Step 2* i.e. again solve the software queuing network with the pre-determined service demands of all critical sections and non-critical sections.. Epsilon (the predetermined value) includes a small decimal number less than 1. Epsilon indicates that the error in the number of blocked threads has stabilized or converged over a number of iterations. Value of epsilon may be taken as 0.005.

The computation module 112 computes a final throughput $X_{EST}$ value of software queuing network and hardware queuing network. Average response time of the individual system is obtained using Little's law. Little's law says that if $N$ is the number of customers in the systems and $X$ is the throughput, $R$ is the response time and $Z$ is the think-time used for requests, then the following relationship exists among these parameters.

$$N = X * (R + Z)$$

Then the utilization of CPU, disk and any other hardware resources is estimated. For a multi-core machine, the average CPU utilization per core is obtained from the estimated throughput and total CPU service demand as given in Equation (1a).

$$U_{CPU} = (D_{CPU} \times X_{EST})/C \qquad (3)$$

Given the pre-determined service demand of all critical sections and non-critical section, the above mean value analysis algorithm is used to obtain performance of the system until the throughput saturates.

The system 102 is configured to validate with multi-class requests where requests from users belong to multiple classes and each class of requests has its own software module that may contain a critical section. In Multi-class performances prediction, two threads may simultaneously be inside their critical sections. Further, critical sections belonging to different classes may have different service demands. Further on a multi-core machine, non-critical sections of all the classes may run simultaneously on different cores.

The system 102 is configured to predict performance of the multi-threaded application where resource pooling is used. Resource pooling refers to cases where a shared resource is a pool of resources. Non limiting examples are DB connection pool or thread pool. Thread pool refers to a number of threads created by an application server to handle requests from concurrent users. At a time a single thread exclusively serves a user. Similarly Database connection pool refers to a cache of database connections created to execute commands on DB more efficiently.

The pool size indicates the maximum number of shared resources that may be used at a given time. Hence, the maximum number of threads that may use the resource is equal to pool size. While configuring the system for performance prediction of the multi-threaded application for pooled resources, resource pooling is modeled as a multi-server in software queuing network and the resource demand corresponds to that of a critical section of a single thread.

The system 102 provides a solution for predicting the performance of the multi-threaded application in presence of application by computing a performance metrics. The solution in terms of performance metrics converges. The three conditions for which the solution provided by the system 102 may converge are:

1. The predetermined service demand of the critical section may not be less than the initial service demand before going through the iterative steps.
2. After a few initial iterations, the number of blocked threads may not reduce from the previous iterations.
3. The difference in the number of blocked threads between a new iteration and a previous iteration is less than a small number.

If these conditions are satisfied, the computing module 112 may not perform the iterative steps and may perform a final step of computing the performance metrics.

The system 102 is configured to predict performance of the multi-threaded java program used as the multi-threaded application with critical sections. It is assumed that the java program has single critical section and single non critical section. Pre-determined service demand has been varied for each of the section and scalability of the multi-threaded application with the number of users is observed.

The results obtained for various service configurations are listed below:

Table 1 Server categories for sample application

| Server category | Features |
|---|---|
| High range services | 8 Core CPU 2.66 GHz Xeon with 1MB L2 cache, 8 GB Physical RAM |
| Middle range services | Quad Core AMD Opteron CPU 2.19 GHz with 2MB L2 cache, 4 GB RAM |
| Low range services | Intel ® Core Duo CPU 2.33 GHz with 4MB Cache, 2 GB RAM |

The performance prediction involved software modules that make use of mainly CPU as the hardware resource which means the software modules perform computation and no disk or network activities are performed. Three different combinations of critical and non-critical sections are considered.

Scenario 1: The critical section and non-critical section are performing similar operations such that their service demands (pre-determined service demand) are almost the same.

Scenario 2: The critical section performs twice the amount of operations as compared to non-critical section. Hence the service demand of the critical section is more than twice of service demand of non-critical section.

Scenario 3: The non-critical section service demand is double the amount as the service demand of critical section.

In cach of the above listed scenario, the java program is accessed by concurrent users and throughput of the program is observed as the concurrency is varied. Throughput is expressed as the number of *iterations* completed per unit time (per second). In iteration, the program executes once the critical section and the non-critical section. In each of the cases, CPU is the only hardware resource that is considered. During the test interval, average throughput, response time of the application and utilization of CPU arc measured. Throughput is measured during the entire test interval and response time is taken as the average time taken to complete an iteration of the program consisting of a critical section and a non-critical section.

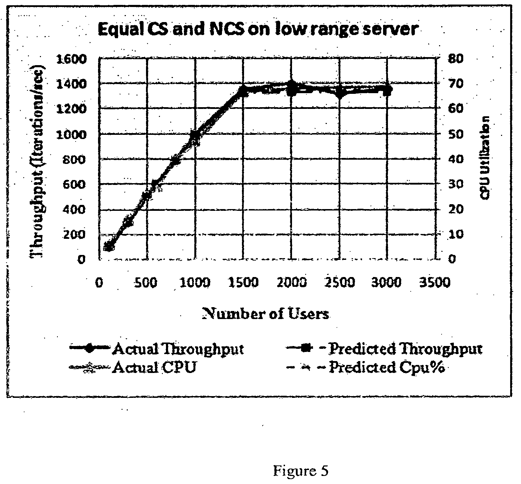

By way of non-limiting example, Figure 5 illustrates performance prediction is explained for a case where the critical and non-critical sections are of same size. The computation module computes a performance metrics by calculating a throughput value. The throughput value saturates due to critical section bottleneck at 2000 users and the average CPU utilization does not go beyond 67%. At 3000 users, the throughput value so predicted is 1327 iterations per second whereas the actual Throughput value is 1360 iterations per second.

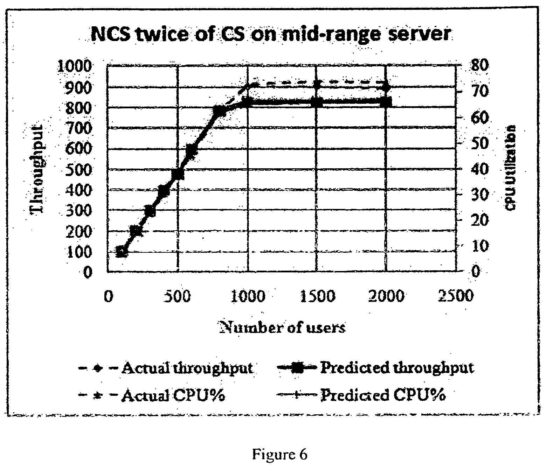

By way of another non limiting example, Figure 6 illustrates performance prediction of the multi-threaded application where the critical and non-critical sections are of different sizes. Here, the threads (users or customers) spend different amount of time in the critical section and non-critical section. Considering scenario 3 (as discussed above), on a mid-range server where service demand of the non-critical section is twice that of the critical section. The figure 6 illustrates the predicted and actual throughput value of the multi-threaded application and utilization of CPU.

It is observed that the predicted throughput is within 10-15% inaccuracy of the actual throughput. For 2000 users, the throughput saturates at 890 iterations/sec and CPU utilization is 73%. The values predicted are 825 iterations/sec and 67%. The difference in the observed and predicted values is attributed to the high service demand estimated using single user test of the application. The system is also configured to predict performance of the multi-threaded application in situations where operations within critical section not only use CPU but also perform I/O operations on disk.

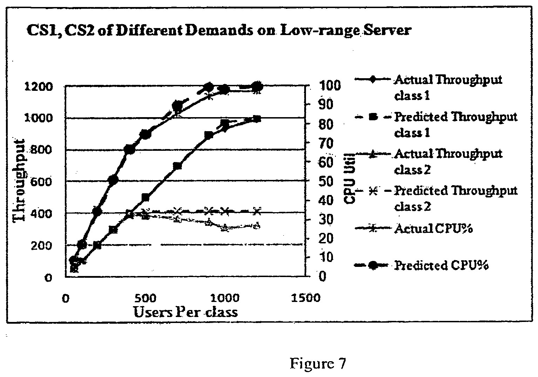

By way of another non limiting example, Figure 7 illustrates performance prediction of the multi-threaded application where critical sections are having multi-class request. In this case, requests from users belong to multiple classes and each class of requests has its own software module that may contain a critical section. In this case only two classes of requests are considered and the critical sections belonging to different classes have different demands. Figure 7 illustrates the predicted throughput for individual classes and overall CPU utilization from different requests.

In this scenario, both the requests use the same number of users. For example when 500 users are accessing request of class 1, another 500 users are accessing request of class 2. Class 1 critical section CS1 has service demand 0.50 ms and class 2 critical section CS2 has service demand 1.9 ms. Since critical section of class 2 has higher demand, it reaches saturation earlier at 500 users itself whereas class 1 critical section continues to have higher throughput until 1200 users. From the figure 7, it may be verified that in multi-class scenario as well, the system 102 is able to predict the throughput for individual classes and overall CPU utilization. However, the predicted throughput and utilization for class 2 are about 10% higher than the actual throughput and utilization. This is due to higher service demand estimated using timer routine around a critical section. The system 102 attributes to higher service demand computed for critical sections. Service demand is obtained through instrumentation of program code corresponding to the synchronization block. The one or more modules captures start-time and end-time of synchronization block to obtain the service demand.

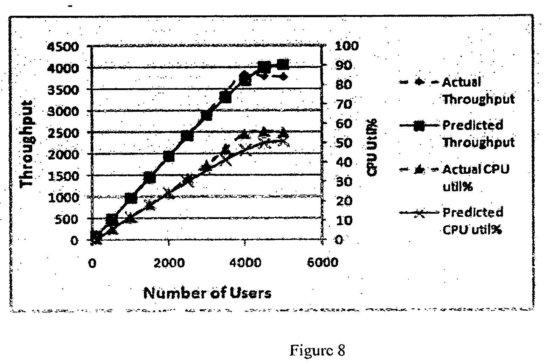

By way of another non limiting example, Figure 8 illustrates performance prediction of the multi-threaded application where critical sections are having resource pooling. The resource pool size of 50 and 100 are used and number of users is varied. The service demand for resource pooling is taken as 13 ms which is relatively higher compared to earlier experiments. This is to restrict the number of users the application scales up-to.

Figure 8 shows total throughput of the entire resource pooling and per core CPU utilization as the number of users is varied on a mid-range server. It may be observed that throughput and utilization predicted by the system 102 indicate the actual values. Due to multiple resources in the pool, throughput is found to be much higher in this case and the application also scales to a higher number of users.

Furthermore, the method can be implemented in any suitable hardware, software, firmware, or combination thereof. However, for ease of

explanation, in the embodiments described below, the method 300 may be considered to be implemented in the above described system 102.

At block 302, one or more queuing networks are represented for resources employed to run the multi-threaded application to detect a concurrency level at.which resource bottlenecks is encountered while accessing the multi-threaded software application.

At block 304, a performance metrics is computed for the multi-threaded software application. The performance metrics comprises of one or more parameters.

At block 306, using an iterative technology with a pre-determined value of service demand to identify a relationship between the software queuing network and the hardware queuing network.

At block 308, value of the one or more parameters is determined in a form of a throughput value and a response time value for the multi-threaded software application, thereby determining the performance of the multi-threaded software application.

## Claims

1. A system to determine performance of a multi-threaded software application in presence of one or more resource bottlenecks, the system comprising:

   a processor (202); and
   a memory (208) coupled to the processor (202), wherein the processor (202) is capable of executing a plurality of modules stored in the memory (208), and wherein the plurality of module comprising:

      a representation module (212) configured to represent a hardware queuing network and a software queuing network for resources employed to run the multi-threaded software application, wherein the queuing networks represent contention for the resources, and wherein the resources comprise hardware resources and software resources, wherein the queuing networks are used to check number of threads accessing the multi-threaded software application when a resource bottleneck is encountered;
      a computation module (214) configured to execute an iterative technique with a pre-determined value of service demand to develop a relationship between the software queuing network and the hardware queuing network , wherein the relationship comprises utilization of the software resources with respect to the hardware resources based on the predetermined value of service demand, and wherein executing the iterative technique comprises:

         obtaining a number of blocked threads at a critical section of the software resources based on the predetermined value of service demand, wherein the blocked threads at the critical section are threads awaiting to enter the critical section;
         obtaining a residence time at each of the hardware resources based on the predetermined value of service demand;
         updating a critical section service demand of a present iteration to an updated critical section service demand to reflect a waiting for the hardware resources by using the residence time, wherein the critical section service demand is iteratively updated to account for resource contention at the hardware resources based on the residence time;

comparing the number of the blocked threads of present iteration with the number of blocked threads of a previous iteration in order to check if the number of the blocked threads of the present iteration are higher than the number of blocked threads of the previous iteration, and checking if the updated critical section service demand is higher than the critical section service demand of the previous iteration; and

identifying a difference between the number of blocked threads at a critical section for the present iteration and the number of blocked threads at the critical section in previous iteration; and

repeatedly executing the iterative technique 1) if the difference in the number of blocked threads is higher than a predefined limit, 2) if the number of the blocked threads of the present iteration are higher than the number of blocked threads of the previous iteration and 3) if the updated critical section service demand is higher than the critical section service demand of the previous iteration; else

obtaining the performance metrics with the updated critical section service demand for the multithreaded software application when the difference in the number of blocked threads is lower than the predefined limit, wherein the predefined limit indicates that the difference in the number of blocked threads has converged over a number of iterations of the iterative technique, thereby determining a performance of the multi-threaded software application.

2. The system of claim 1, wherein the software resources comprise of software modules and hardware resources comprise of a CPU (Central Processing Unit), a memory, a disk or a combination thereof.

3. The system of claim 1, wherein the software queuing network represents software modul es corresponding to one or more critical sections and one or more non-critical sections, and the hardware queuing network represents plurality of hardware resources, and wherein a critical section corresponds to a single shared resource and a non-critical section corresponds to a portion of code that may be executed simultaneously by 'n' number of threads.

4. The system of claim 1, wherein the one or more resource bottlenecks comprises of one or more software bottlenecks, one or more hardware bottlenecks, and one or more bottlenecks due to any one of a thread pool, a database connection pool, sockets or locks on data item, or a combination thereof.

5. The system of claim 1, wherein the predetermined value of service demand comprises of, a service demand of the hardware resources at one or more tiers of the multi-threaded software application; and a service demand of one or more synchronization events associated with the multi-threaded software application.

6. The system of claim 3, wherein the computation module computes the performance metrics for the software application for the 'n' number of threads, wherein 'n' is in a range from one to thousands.

7. The system of claim 1, wherein the one or more parameters of performance metrics comprises of a throughput, a response time, an amount of waiting time of the threads, a number of objects in a queue, and a probability that a queue becomes empty, an average CPU (Central Processing Unit) utilization per core from the throughput and a total CPU service demand.

8. The system of claim 1, wherein the computation module computes the performance metrics when difference in the number of blocked threads stabilizes.

9. A method to determine performance of a multi-threaded software application in presence of one or more resource bottlenecks, the method comprises:

representing, by a processor, a hardware queuing network and a software queuing network, for resources employed to run the multi-threaded software application, wherein the queuing networks represent contention for the resources, and wherein the resources comprise hardware resources and software resources, wherein the queuing networks are used to check number of threads accessing the multi-threaded software application when a resource bottleneck is encountered; wherein the processor is used to develop a relationship between the software queuing network and the hardware queuing network by executing, an iterative technique with a pre-determined value of service demand, wherein the relationship comprises utilization of the software resources with respect to the hardware resources based on the predetermined value of service demand; and wherein executing the iterative technique comprises :

obtaining a number of blocked threads at a critical section of the software resources based on the pre-determined value of service demand, wherein the blocked threads at the critical section are threads awaiting to enter the critical section;

obtaining a residence time at each of the hardware resources based on the predetermined value of service demand;

updating a critical section service demand of a present iteration to an updated critical section service demand to reflect a waiting for the hardware resources by using the residence time, wherein the present critical section service demand is iteratively updated to account for resource contention at the hardware resources based on the residence time;

comparing the number of the blocked threads of present iteration with the number of blocked threads of a previous iteration in order to check if the number of the blocked threads of the present iteration are higher than the number of blocked threads of the previous iteration, and checking if the updated critical section service demand is higher than the critical section service demand of the previous iteration; and

identifying a difference between the number of blocked threads at a critical section for the present iteration and the number of blocked threads at the critical section in previous iteration; and

repeatedly executing the iterative technique 1) if the difference in the number of blocked threads is higher than a predefined limit, and 2) if the number of the blocked threads of the present iteration are higher than the number of blocked threads of the previous iteration and 3) if the updated critical section service demand is higher than the critical section service demand of the previous iteration; else

obtaining the performance metrics with the updated critical section service demand for the multithreaded software application when the difference in the number of blocked threads is lower than the predefined limit, wherein the predefined limit indicates that the difference in the number of blocked threads has converged over a number of iterations of the iterative technique thereby determining a performance of the multi-threaded software application.

10. The method of claim 9, wherein the predetermined value of the service demand comprises of a service demand of all the hardware resources at each of tiers of the software application; and a service demand of all synchronization events.

11. A computer program product having embodied thereon a computer program to determine performance of a multi-threaded software application in presence of one or more resource bottlenecks, the computer program product comprising a program code for performing a method according to claim 9.

12. The computer program product of claim 11, wherein the software queuing network represents software modules corresponding to one or more critical sections and one or more non-critical sections, and the hardware queuing network represents plurality of hardware resources, and wherein a critical section corresponds to a single shared resource and a non-critical section corresponds to a portion of code that may be executed simultaneously by 'n' number of threads.

13. The method of claim 9, wherein the one or more parameters of the performance metrics comprises a throughput, a response time, an amount of waiting time of the threads, a number of objects in a queue, and a probability that a queue becomes empty.

14. The method of claim 9, wherein the iterative technique is a mean value analysis method.

15. The method of claim 9, wherein the software queuing network represents software modules corresponding to one or more critical sections and one or more non-critical sections, and the hardware queuing network represents plurality of hardware resources, and wherein a critical section corresponds to a single shared resource and a non-critical section corresponds to a portion of code that may be executed simultaneously by 'n' number of threads.

**Patentansprüche**

1. System zum Bestimmen der Leistung einer Multithread-Softwareanwendung in Anwesenheit eines oder mehrerer Ressourcenengpässe, wobei das System Folgendes umfasst:

einen Prozessor (202); und
einen mit dem Prozessor (202) gekoppelten Speicher (208), wobei der Prozessor (202) in der Lage ist, mehrere in dem Speicher (208) gespeicherte Module auszuführen, und wobei die mehreren Module Folgendes umfassen:

ein Darstellungsmodul (212), konfiguriert zum Darstellen eines Hardware-Warteschlangennetzwerks und eines Software-Warteschlangennetzwerks für Ressourcen, eingesetzt zum Durchführen der Multithread-Softwareanwendung, wobei die Warteschlangennetzwerke einen Ressourcenkonflikt darstellen und wobei die Ressourcen Hardwareressourcen und Softwareressourcen umfassen, wobei die Warteschlangennetzwerke eingesetzt werden, um eine Anzahl von Threads zu prüfen, die auf die Multithread-Softwareanwendung zugreifen, wenn es zu einem Ressourcenengpass kommt;

ein Berechnungsmodul (214), konfiguriert zum Ausführen einer iterativen Vorgehensweise mit einem vorbestimmten Wert eines Dienstbedarfs zum Entwickeln eines Verhältnisses zwischen dem Software-Warteschlangennetzwerk und dem Hardware-Warteschlangennetzwerk, wobei das Verhältnis das Einsetzen der Softwareressourcen mit Bezug auf die Hardwareressourcen auf der Grundlage des vorbestimmten Wertes des Dienstbedarfs umfasst, und wobei das Ausführen der iterativen Vorgehensweise Folgendes umfasst:

Erhalten einer Anzahl von blockierten Threads in einem kritischen Bereich der Softwareressourcen auf der Grundlage des vorbestimmten Wertes des Dienstbedarfs, wobei die blockierten Threads in dem kritischen Bereich Threads sind, die darauf warten, in den kritischen Bereich einzutreten;

Erhalten einer Verweildauer von jeder der Hardwareressourcen auf der Grundlage des vorbestimmten Wertes des Dienstbedarfs;

Aktualisieren eines Dienstbedarfs des kritischen Bereichs einer vorliegenden Iteration auf einen aktualisierten Dienstbedarf des kritischen Bereichs, zum Darstellen eines Wartens auf die Hardwareressourcen unter Einsatz der Verweildauer, wobei der Dienstbedarf des kritischen Bereichs iterativ aktualisiert wird, um einen Ressourcenkonflikt in den Hardwareressourcen auf der Grundlage der Verweildauer zu berücksichtigen;

Vergleichen der Anzahl der blockierten Threads der vorliegenden Iteration mit der Anzahl der blockierten Threads einer vorherigen Iteration, um zu prüfen, ob die Anzahl der blockierten Threads der vorliegenden Iteration höher ist als die Anzahl der blockierten Threads der vorherigen Iteration, und Prüfen, ob der aktualisierte Dienstbedarf des kritischen Bereichs höher ist als der Dienstbedarf des kritischen Bereichs der vorherigen Iteration; und

Identifizieren einer Differenz zwischen der Anzahl von blockierten Threads in einem kritischen Bereich für die vorliegende Iteration und der Anzahl von blockierten Threads in dem kritischen Bereich in der vorherigen Iteration; und

wiederholtes Ausführen der iterativen Vorgehensweise: 1) wenn die Differenz der Anzahl der blockierten Threads höher ist als ein vorgegebener Grenzwert, 2) wenn die Anzahl der blockierten Threads der vorliegenden Iteration höher ist als die Anzahl der blockierten Threads der vorherigen Iteration und 3) wenn der aktualisierte Dienstbedarf des kritischen Bereichs höher ist als der Dienstbedarf des kritischen Bereichs der vorherigen Iteration; ansonsten

Erhalten der Leistungsmetriken mit dem aktualisierten Dienstbedarf des kritischen Bereichs für die Multithread-Softwareanwendung, wenn die Differenz in der Anzahl von blockierten Threads unter dem vorgegebenen Grenzwert liegt, wobei der vorgegebene Grenzwert andeutet, dass die Differenz in der Anzahl von blockierten Threads über eine Anzahl von Iterationen der iterativen Vorgehensweise zusammengelaufen ist, wodurch eine Leistung der Multithread-Softwareanwendung bestimmt wird.

2. System nach Anspruch 1, wobei die Softwareressourcen aus Softwaremodulen bestehen und Hardwareressourcen aus einer CPU (Zentralprozessor), einem Speicher, einer Platte oder einer Kombination daraus bestehen.

3. System nach Anspruch 1, wobei das Software-Warteschlangennetzwerk Softwaremodule darstellt, die einem oder mehreren kritischen Bereichen und einem oder mehreren nichtkritischen Bereichen entsprechen, und das Hardware-Warteschlangennetzwerk mehrere Hardwareressourcen darstellt, und wobei ein kritischer Bereich einer einzelnen gemeinsam genutzten Ressource entspricht und ein nichtkritischer Bereich einem Codebereich entspricht, der durch eine Anzahl von "n" Threads gleichzeitig ausgeführt werden kann.

4. System nach Anspruch 1, wobei der eine oder die mehreren Ressourcenengpässe aus einem oder mehreren Softwareengpässen, einem oder mehreren Hardwareengpässen und einem oder mehreren Engpässen auf der Grundlage eines Threadpools, eines Datenbankverbindungspools, Sockets oder Sperren eines Datenelements oder einer Kombination davon bestehen.

5. System nach Anspruch 1, wobei der vorgegebene Wert des Dienstbedarfs aus einem Dienstbedarf der Hardwareressourcen in einer oder mehreren Ebenen der Multithread-Softwareanwendung sowie einem Dienstbedarf eines oder mehrerer Synchronisierungsereignisse in Verbindung mit der Multithread-Softwareanwendung besteht.

6. System nach Anspruch 3, wobei das Berechnungsmodul die Leistungsmetriken für die Softwareanwendung für die Anzahl von "n" Threads berechnet, wobei "n" in einem Bereich von eins bis mehreren Tausend liegt.

7. System nach Anspruch 1, wobei der eine oder die mehreren Parameter von Leistungsmetriken aus Folgendem bestehen: einem Durchsatz, einer Antwortzeit, einem Wert einer Wartezeit der Threads, einer Anzahl von Objekten in einer Warteschlange und einer Wahrscheinlichkeit, dass eine Warteschlange sich leert, einer durchschnittlichen CPU(Zentralprozessor)-Nutzung je Kern aus dem Durchsatz und einem Gesamt-CPU-Dienstbedarf.

8. System nach Anspruch 1, wobei das Berechnungsmodul die Leistungsmetriken berechnet, wenn die Anzahl von blockierten Threads sich stabilisiert.

9. Verfahren zum Bestimmen der Leistung einer Multithread-Softwareanwendung in Anwesenheit eines oder mehrerer Ressourcenengpässe, wobei das Verfahren Folgendes umfasst:

Darstellen, unter Einsatz eines Prozessors, eines Hardware-Warteschlangennetzwerks und eines Software-Warteschlangennetzwerks für Ressourcen, eingesetzt zum Durchführen der Multithread-Softwareanwendung, wobei die Warteschlangennetzwerke einen Ressourcenkonflikt darstellen und wobei die Ressourcen Hardwareressourcen und Softwareressourcen umfassen, wobei die Warteschlangennetzwerke eingesetzt werden, um eine Anzahl von Threads zu prüfen, die auf die Multithread-Softwareanwendung zugreifen, wenn es zu einem Ressourcenengpass kommt;
wobei der Prozessor eingesetzt wird zum Entwickeln eines Verhältnisses zwischen dem Software-Warteschlangennetzwerk und dem Hardware-Warteschlangennetzwerk durch Ausführen einer iterativen Vorgehensweise mit einem vorbestimmten Wert eines Dienstbedarfs, wobei das Verhältnis das Einsetzen der Softwareressourcen mit Bezug auf die Hardwareressourcen auf der Grundlage des vorbestimmten Wertes des Dienstbedarfs umfasst, und wobei das Ausführen der iterativen Vorgehensweise Folgendes umfasst:

Erhalten einer Anzahl von blockierten Threads in einem kritischen Bereich der Softwareressourcen auf der Grundlage des vorbestimmten Wertes des Dienstbedarfs, wobei die blockierten Threads in dem kritischen Bereich Threads sind, die darauf warten, in den kritischen Bereich einzutreten;
Erhalten einer Verweildauer von jeder der Hardwareressourcen auf der Grundlage des vorbestimmten Wertes des Dienstbedarfs;
Aktualisieren eines Dienstbedarfs des kritischen Bereichs einer vorliegenden Iteration auf einen aktualisierten Dienstbedarf des kritischen Bereichs, zum Darstellen eines Wartens auf die Hardwareressourcen unter Einsatz der Verweildauer, wobei der Dienstbedarf des vorliegenden kritischen Bereichs iterativ aktualisiert wird, um einen Ressourcenkonflikt in den Hardwareressourcen auf der Grundlage der Verweildauer zu berücksichtigen;
Vergleichen der Anzahl der blockierten Threads der vorliegenden Iteration mit der Anzahl von blockierten Threads einer vorherigen Iteration, um zu prüfen, ob die Anzahl der blockierten Threads der vorliegenden Iteration höher ist als die Anzahl der blockierten Threads der vorherigen Iteration, und Prüfen, ob der aktualisierte Dienstbedarf des kritischen Bereichs höher ist als der Dienstbedarf des kritischen Bereichs der vorherigen Iteration; und
Identifizieren einer Differenz zwischen der Anzahl von blockierten Threads in einem kritischen Bereich für die vorliegende Iteration und der Anzahl von blockierten Threads in dem kritischen Bereich in der vorherigen Iteration; und

wiederholtes Ausführen der iterativen Vorgehensweise: 1) wenn die Differenz der Anzahl von blockierten Threads höher ist als ein vorgegebener Grenzwert und 2) wenn die Anzahl der blockierten Threads der vorliegenden Iteration höher ist als die Anzahl der blockierten Threads der vorherigen Iteration und 3) wenn der aktualisierte Dienstbedarf des kritischen Bereichs höher ist als der Dienstbedarf des kritischen Bereichs der vorherigen Iteration; ansonsten
Erhalten der Leistungsmetriken mit dem aktualisierten Dienstbedarf des kritischen Bereichs für die Multithread-Softwareanwendung, wenn die Differenz in der Anzahl von blockierten Threads unter dem vorgegebenen Grenzwert liegt, wobei der vorgegebene Grenzwert andeutet, dass die Differenz in der Anzahl von blockierten Threads über eine Anzahl von Iterationen der iterativen Vorgehensweise zusammengelaufen ist, wodurch eine Leistung der Multithread-Softwareanwendung bestimmt wird.

10. Verfahren nach Anspruch 9, wobei der vorgegebene Wert des Dienstbedarfs aus einem Dienstbedarf aller Hardwareressourcen in jeder der Ebenen der Softwareanwendung sowie einem Dienstbedarf aller Synchronisierungsereignisse besteht.

11. Computerprogrammprodukt, in dem ein Computerprogramm umgesetzt ist, um die Leistung einer Multithread-Softwareanwendung in Gegenwart von einem oder mehreren Ressourcenengpässen zu bestimmen, wobei das Computerprogrammprodukt einen Programmcode zum Ausführen eines Verfahrens nach Anspruch 9 umfasst.

12. Computerprogrammprodukt nach Anspruch 11, wobei das Software-Warteschlangennetzwerk Softwaremodule darstellt, die einem oder mehreren kritischen Bereichen und einem oder mehreren nichtkritischen Bereichen entsprechen, und das Hardware-Warteschlangennetzwerk mehrere Hardwareressourcen darstellt, und wobei ein kritischer Bereich einer einzelnen gemeinsam genutzten Ressource entspricht und ein nichtkritischer Bereich einem Codebereich entspricht, der durch eine Anzahl von "n" Threads gleichzeitig ausgeführt werden kann.

13. Verfahren nach Anspruch 9, wobei der eine oder die mehreren Parameter der Leistungsmetriken Folgendes umfassen: einen Durchsatz, eine Antwortzeit, einen Wert einer Wartezeit der Threads, eine Anzahl von Objekten in einer Warteschlange und eine Wahrscheinlichkeit, dass eine Warteschlange sich leert.

14. Verfahren nach Anspruch 9, wobei die iterative Vorgehensweise ein Mittelwertanalyseverfahren ist.

15. Verfahren nach Anspruch 9, wobei das Software-Warteschlangennetzwerk Softwaremodule darstellt, die einem oder mehreren kritischen Bereichen und einem oder mehreren nichtkritischen Bereichen entsprechen, und das Hardware-Warteschlangennetzwerk mehrere Hardwareressourcen darstellt, und wobei ein kritischer Bereich einer einzelnen gemeinsam genutzten Ressource entspricht und ein nichtkritischer Bereich einem Codebereich entspricht, der durch eine Anzahl von "n" Threads gleichzeitig ausgeführt werden kann.


**Revendications**

1. Système pour déterminer la performance d'une application logicielle multifilière en présence d'un ou de plusieurs congestionnements de ressources, le système comprenant :

   un processeur (202) ; et
   une mémoire (208) couplée au processeur (202), dans lequel le processeur (202) est capable d'exécuter une pluralité de modules stockés dans la mémoire (208), et dans lequel la pluralité de modules comprenant :

      un module de représentation (212) configuré pour représenter un réseau de mise en file d'attente matériel et un réseau de mise en file d'attente logiciel pour des ressources employées pour mettre en oeuvre l'application logicielle multifilière, dans lequel les réseaux de mise en file d'attente représentent une contention pour les ressources, et dans lequel les ressources comprennent des ressources matérielles et des ressources logicielles, dans lequel les réseaux de mise en file d'attente sont utilisés pour vérifier un nombre de filières accédant à l'application logicielle multifilière lorsqu'un congestionnement de ressources est rencontré ;
      un module de calcul (214) configuré pour exécuter une technique itérative avec une valeur prédéterminée de demande de service pour développer une relation entre le réseau de mise en file d'attente logiciel et le réseau de mise en file d'attente matériel, dans lequel la relation comprend une utilisation des ressources logicielles par rapport aux ressources matérielles en se basant sur la valeur prédéterminée de demande de service, et
      dans lequel l'exécution de la technique itérative comprend :

         l'obtention d'un nombre de filières bloquées au niveau d'une section critique des ressources logicielles en se basant sur la valeur prédéterminée de demande de service, dans lequel les filières bloquées au niveau de la section critique sont des filières en attente d'entrer dans la section critique ;
         l'obtention d'un temps de séjour au niveau de chacune des ressources matérielles en se basant sur la valeur prédéterminée de demande de service ;
         la mise à jour d'une demande de service de section critique d'une présente itération à une demande de service de section critique mise à jour pour refléter une attente des ressources matérielles par l'utilisation du temps de séjour, dans lequel la demande de service de section critique est mise à jour itérativement pour rendre compte d'une contention de ressources au niveau des ressources matérielles en se basant sur le temps de séjour ;

la comparaison du nombre des filières bloquées de la présente itération avec le nombre de filières bloquées d'une itération précédente afin de vérifier si le nombre des filières bloquées de la présente itération est plus élevé que le nombre des filières bloquées de l'itération précédente, et le fait de vérifier si la demande de service de section critique mise à jour est plus élevée que la demande de service de section critique de l'itération précédente ; et

l'identification d'une différence entre le nombre de filières bloquées au niveau d'une section critique pour la présente itération et le nombre de filières bloquées au niveau de la section critique dans l'itération précédente ; et

l'exécution de façon répétée de la technique itérative 1) si la différence du nombre de filières bloquées est plus élevée qu'une limite prédéfinie, 2) si le nombre de filières bloquées de la présente itération est plus élevé que le nombre de filières bloquées de l'itération précédente et 3) si la demande de service de section critique mise à jour est plus élevée que la demande de service de section critique de l'itération précédente ; sinon

l'obtention des métriques de performance avec la demande de service de section critique mise à jour pour l'application logicielle multifilière lorsque la différence du nombre de filières bloquées est plus faible que la limite prédéfinie, dans lequel la limite prédéfinie indique que la différence du nombre de filières bloquées a convergé sur un nombre d'itérations de la technique itérative, déterminant ainsi une performance de l'application logicielle multifilière.

2. Système selon la revendication 1, dans lequel les ressources logicielles comprennent des modules logiciels et des modules matériels comprennent une UC (unité centrale), une mémoire, un disque ou l'une de leurs combinaisons.

3. Système selon la revendication 1, dans lequel le réseau de mise en file d'attente logiciel représente un module logiciel correspondant à une ou plusieurs sections critiques et une ou plusieurs sections non critiques, et le réseau de mise en file d'attente matériel représente une pluralité de ressources matérielles, et dans lequel une section critique correspond à une ressource partagée unique et une section non critique correspond à une portion de code qui peut être exécutée simultanément par un nombre « n » de filières.

4. Système selon la revendication 1, dans lequel les un ou plusieurs congestionnements de ressources comprennent un ou plusieurs congestionnements logiciels, un ou plusieurs congestionnements matériels, et un ou plusieurs congestionnements dus à l'un quelconque parmi un groupe de filières, un groupe de connexions de base de données, des connecteurs logiciels ou des verrous sur un élément de données, ou l'une de leurs combinaisons.

5. Système selon la revendication 1, dans lequel la valeur prédéterminée de demande de service comprend une demande de service de ressources matérielles au niveau d'un ou de plusieurs tiers de l'application logicielle multifilière ; et une demande de service d'un ou de plusieurs évènements de synchronisation associés à l'application logicielle multifilière.

6. Système selon la revendication 3, dans lequel le module de calcul calcule les métriques de performance pour l'application logicielle pour le nombre « n » de filières, dans lequel « n » est dans une plage de un à des milliers.

7. Système selon la revendication 1, dans lequel les un ou plusieurs paramètres de métriques de performance comprennent un débit de traitement, un temps de réponse, une durée d'attente des filières, un nombre d'objets dans une file d'attente, et une probabilité qu'une file d'attente devienne vide, une utilisation d'UC (unité centrale) moyenne par coeur à partir du débit de traitement et une demande de service d'UC totale.

8. Système selon la revendication 1, dans lequel le module de calcul calcule les métriques de performance lorsqu'une différence du nombre de filières bloquées se stabilise.

9. Procédé pour déterminer la performance d'une application logicielle multifilière en présence d'un ou de plusieurs congestionnements de ressources, le procédé comprenant :

la représentation, par un processeur, d'un réseau de mise en file d'attente matériel et un réseau de mise en file d'attente logiciel, pour des ressources employées pour mettre en oeuvre l'application logicielle multifilière, dans lequel les réseaux de mise en file d'attente représentent une contention pour les ressources, et dans lequel les ressources comprennent des ressources matérielles et des ressources logicielles,

dans lequel les réseaux de mise en file d'attente sont utilisés pour vérifier un nombre de filières accédant à l'application logicielle multifilière lorsqu'un congestionnement de ressources est rencontré ;

dans lequel le processeur est utilisé pour développer une relation entre le réseau de mise en file d'attente logiciel et le réseau de mise en file d'attente matériel en exécutant une technique itérative avec une valeur prédéterminée de demande de service, dans lequel la relation comprend une utilisation des ressources logicielles par rapport aux ressources matérielles en se basant sur la valeur prédéterminée de demande de service, et dans lequel l'exécution de la technique itérative comprend :

l'obtention d'un nombre de filières bloquées au niveau d'une section critique des ressources logicielles en se basant sur la valeur prédéterminée de demande de service, dans lequel les filières bloquées au niveau de la section critique sont des filières en attente d'entrer dans la section critique ;

l'obtention d'un temps de séjour au niveau de chacune des ressources matérielles en se basant sur la valeur prédéterminée de demande de service ;

la mise à jour d'une demande de service de section critique d'une présente itération à une demande de service de section critique mise à jour pour refléter une attente des ressources matérielles par l'utilisation du temps de séjour, dans lequel la présente demande de service de section critique est mise à jour itérativement pour rendre compte d'une contention de ressources au niveau des ressources matérielles en se basant sur le temps de séjour ;

la comparaison du nombre des filières bloquées de la présente itération avec le nombre de filières bloquées d'une itération précédente afin de vérifier si le nombre des filières bloquées de la présente itération est plus élevé que le nombre de filières bloquées de l'itération précédente, et le fait de vérifier si la demande de service de section critique mise à jour est plus élevée que la demande de service de section critique de l'itération précédente ; et

l'identification d'une différence entre le nombre de filières bloquées au niveau d'une section critique pour la présente itération et le nombre de filières bloquées au niveau de la section critique dans l'itération précédente ; et

l'exécution répétée de la technique itérative 1) si la différence du nombre de filières bloquées est plus élevée qu'une limite prédéfinie, 2) si le nombre de filières bloquées de la présente itération est plus élevé que le nombre de filières bloquées de l'itération précédente et 3) si la demande de service de section critique mise à jour est plus élevée que la demande de service de section critique de la présente itération ; sinon

l'obtention des métriques de performance avec la demande de service de section critique mise à jour pour l'application logicielle multifilière lorsque la différence du nombre de filières bloquées est plus faible que la limite prédéfinie, dans lequel la limite prédéfinie indique que la différence du nombre de filières bloquées a convergé sur un nombre d'itérations de la technique itérative, déterminant de ce fait une performance de l'application logicielle multifilière.

10. Procédé selon la revendication 9, dans lequel la valeur prédéterminée de la demande de service comprend une demande de service de toutes les ressources matérielles au niveau de chacun des tiers de l'application logicielle ; et une demande de service de tous les évènements de synchronisation.

11. Produit programme d'ordinateur incorporant un programme d'ordinateur pour déterminer la performance d'une application logicielle multifilière en présence d'un ou de plusieurs congestionnements de ressources, le produit programme d'ordinateur comprenant un code de programme permettant de réaliser un procédé selon la revendication 9.

12. Produit programme d'ordinateur selon la revendication 11, dans lequel le réseau de mise en file d'attente logiciel représente des modules logiciels correspondant à une ou plusieurs sections critiques et une ou plusieurs sections non critiques, et le réseau de mise en file d'attente matériel représente une pluralité de ressources matérielles, et dans lequel une section critique correspond à une ressource partagée unique et une section non critique correspond à une portion de code qui peut être exécutée simultanément par un nombre « n » de filières.

13. Procédé selon la revendication 9, dans lequel les un ou plusieurs paramètres des métriques de performance comprennent un débit de traitement, un temps de réponse, une durée d'attente des filières, un nombre d'objets dans une file d'attente, et une probabilité qu'une file d'attente devienne vide.

14. Procédé selon la revendication 9, dans lequel la technique itérative est un procédé d'analyse de valeur moyenne.

**15.** Procédé selon la revendication 9, dans lequel le réseau de mise en file d'attente logiciel représente des modules logiciels correspondant à une ou plusieurs sections critiques et une ou plusieurs sections non critiques, et le réseau de mise en file d'attente matériel représente une pluralité de ressources matérielles, et dans lequel une section critique correspond à une ressource partagée unique et une section non critique correspond à une portion de code qui peut être exécutée simultanément par un nombre « n » de filières.

100

SYSTEM (102)

NETWORK

(106)

104 - 1          104 - 2          104 - 3          104 - N

Figure 1

Figure 2

**300**

Representing one or more queuing networks (302)

Computing a performance metrics (304)

Using an iterative technique with a predetermined service demand to identify a relationship between the software queuing network and the hardware queuing network (306)

determining the one or more parameters in a form of a throughput value and a response time value for the multi-threaded software application (308)

Figure 3

Figure 4

Figure 5

Figure 6

Figure 7

Figure 8

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110218786 A

- JP 2000298593 B